# FASCICULE DE BREVET EUROPEEN

(11) **EP 4 035 745 B1**
(45) Date de publication et mention de la délivrance du brevet: **14.08.2024**
(21) Numéro de dépôt: 21305105.5
(22) Date de dépôt: 27.01.2021
(51) Int. Cl.: A62C 2/12, A62C 2/24, F16K 31/54, F16K 31/56, F24F 11/33, F24F 13/14

(54) **DISPOSITIF DE MANOEUVRE D'UN PANNEAU OBTURATEUR A MECANISME DE BUTEE DEBRAYABLE**
VORRICHTUNG ZUR BETÄTIGUNG EINES VERSCHLUSSPANEELS MIT AUSRÜCKBAREM ANSCHLAGMECHANISMUS
DEVICE FOR OPERATING A LOCKING PANEL WITH RELEASABLE ABUTMENT MECHANISM

(43) Date de publication de la demande: 03.08.2022
(73) Titulaire: Soletanche Freyssinet, 92500 Rueil Malmaison (FR)
(72) Inventeur: WILLOQUET, Bertrand, 38510 Morestel (FR)
(74) Mandataire: Plasseraud IP

(56) Documents cités:
- EP-A1- 1 830 117
- EP-A1- 2 230 426

## Description

### Domaine technique

L'invention relève du domaine des dispositifs de protection au feu de bâtiments et plus particulièrement concerne les clapets coupe-feu ou les volets de désenfumage disposés dans des conduits traversant des cloisons entre des locaux. Ordinairement, les clapets coupe-feu sont armés en position ouverte pour permettre la ventilation normale d'un bâtiment, puis déclenchés en position fermée en cas d'incendie pour empêcher la propagation du feu entre locaux du bâtiment. Les volets de désenfumage sont ordinairement armés en position fermée, puis déclenchés en position ouverte en cas d'incendie pour permettre le désenfumage des locaux, les circuits de désenfumage étant dédiés au désenfumage. L'invention concerne plus particulièrement un dispositif, de manoeuvre d'un panneau obturateur d'un tel clapet ou volet, à mécanisme de butée débrayable.

### Technique antérieure

Un clapet coupe-feu ou un volet de désenfumage comporte, généralement dans un tunnel ou un conduit, un cadre fixe dans lequel est disposé un obturateur pivotant sur un axe manoeuvré par un actionneur. L'obturateur comporte deux positions extrêmes : une position pour laquelle l'obturateur est ouvert et laisse passer l'air dans le conduit ou le tunnel et une position pour laquelle l'obturateur est fermé et ferme le conduit ou le tunnel. Pour un clapet coupe-feu, la position dite armée est une position pour laquelle l'obturateur est ouvert alors que pour le volet de désenfumage la position dite armée est une position dans laquelle l'obturateur est fermé. Réciproquement, pour un clapet coupe-feu, la position dite déclenchée est une position pour laquelle l'obturateur est fermé alors que pour le volet de désenfumage la position dite déclenchée est une position dans laquelle l'obturateur est ouvert. L'obturateur passe à la position armée ou déclenché respectivement à la réception par l'actionneur d'un ordre d'armement ou de déclenchement.

Dans une configuration où l'obturateur de type panneau rectangulaire est un panneau de type papillon qui pivote autour d'un axe passant par une droite médiane horizontale, une solution pour manoeuvrer le panneau est que le panneau comporte un axe de manoeuvre solidaire d'un pignon s'engrenant sur une crémaillère entraînée par un chariot mobile rectilignement. Dans le sens d'armement, pour ouvrir le clapet ou fermer le volet, le chariot est poussé par une tige motorisée, et dans le sens de déclenchement, pour refermer le clapet ou ouvrir le volet, le chariot est poussé par un ressort de déclenchement préalablement bandé lors d'une phase d'armement, puis maintenu bandé par une gâchette tant qu'un ordre de déclenchement n'est pas réceptionné.

Le document EP2230426 A1 décrit par exemple un actionneur de clapet, notamment le volet d'un clapet coupe-feu, mis en position d'armement et déclenché par un ordre de déclenchement associé à un évènement, ayant un boîtier et un axe d'entraînement porté par le boîtier, solidaire du volet et relié à un ressort d'accumulateur bandé en position d'armement et rappelant le volet en position active et des organes de déclenchement comprenant un chariot guidé en translation, solidaire en mouvement de l'axe d'entraînement par une liaison à roue dentée et crémaillère et muni d'une butée d'armement et un dispositif d'armement relié au chariot par une liaison libérable par un dispositif de déclenchement.

### Problème technique

Il existe toutefois des configurations où le déclenchement doit être prioritaire par rapport à l'armement pour des questions de sécurité en particulier. En effet, lorsqu'un réarmement est en cours, ou si le mouvement de la tige d'armement s'interrompt alors qu'elle n'est pas débrayée du chariot et qu'un ordre de déclenchement est réceptionné, la tige motorisée contrarie l'action du ressort de déclenchement, et empêche le déclenchement lui-même.

### Exposé de l'invention

Au vu de l'art antérieur la présente invention propose une solution qui permet de rendre le déclenchement prioritaire sur l'armement et notamment dans les cas où un ordre de déclenchement est réceptionné alors qu'un réarmement est en cours, lorsque l'alimentation électrique de la tige motorisée est inopinément rompue ou lorsque la motorisation de la tige est inopinément défectueuse.

Plus précisément la présente invention prévoit :

Un dispositif de manoeuvre d'un panneau obturateur d'un volet ou clapet coupe-feu, le panneau obturateur étant un panneau pivotant autour d'un axe de manoeuvre commandé par un dispositif à pignon et crémaillère, ladite crémaillère étant manoeuvrée par un chariot, poussé dans un sens d'armement vers une position dite armée par une extrémité avant d'une tige mobile sous l'action d'un moteur et poussé dans un sens de déclenchement vers une position dite déclenchée par un ressort préalablement bandé par la poussée de la tige sur le chariot, caractérisé en ce que le chariot comporte un mécanisme de butée débrayable muni d'un loquet, pourvu d'un épaulement d'appui de la tige motorisée, et conformé pour pouvoir pivoter autour d'un axe entre une position d'embrayage pour laquelle la tige pousse sur ledit épaulement dans le sens d'armement et une position de débrayage pour laquelle le loquet s'efface par pivotement et laisse passer la tige, et muni d'un bras de verrouillage , mobile entre une position de verrouillage du loquet dans la position d'embrayage et une position de libération du loquet.

Le mécanisme peut comporter un ressort de rappel du bras de verrouillage vers la position de libération du loquet et un moyen de maintien temporaire du bras de verrouillage en position de verrouillage du loquet.

Le moyen de maintien temporaire du bras de verrouillage en position de verrouillage du loquet peut comporter une plaque ferromagnétique solidaire du bras en regard d'un premier électroaimant solidaire du chariot qui, lorsqu'il est alimenté, maintient la plaque ferromagnétique collée, bras en position de verrouillage du loquet.

Le bras de verrouillage peut comporter :
- une première branche pourvue d'un premier segment, pourvu d'une extrémité distale porteuse de la plaque ferromagnétique, d'un coude porteur d'un galet réalisant une zone d'appui sur un doigt du loquet dans ladite position de verrouillage et d'un second segment pourvu d'une extrémité proximale au niveau d'un axe de rotation du bras, et ;
- une seconde branche pourvue d'une extrémité proximale au niveau de l'axe et d'une extrémité distale d'accroche dudit ressort de rappel et formant butée pour une première extrémité d'une butée ressort adaptée à pousser le bras en position de collage de la plaque ferromagnétique par le premier électroaimant lorsque le chariot est positionné en position de fermeture du panneau.

La butée ressort peut comporter un ressort de rattrapage de jeu.

La butée ressort peut comporter un poussoir comportant une ou deux tiges.

Avantageusement, une seconde extrémité de la butée ressort est reliée à une extrémité arrière de la tige au travers d'un mécanisme de poussée configuré en sorte de déplacer la butée ressort dans la position de poussée du bras en position de collage de la plaque ferromagnétique par le premier électroaimant lorsque la tige est dans une position reculée par rapport au loquet.

Préférablement, la distance du doigt du loquet à l'axe de rotation du loquet peut être plus longue que la distance de l'épaulement audit axe en sorte de permettre le maintien du loquet en position embrayée avec un effort moindre que celui qu'exerce la tige motorisée sur l'épaulement.

Le dispositif de manoeuvre peut comporter un dispositif de commande pourvu de moyens d'alimentation électrique du moteur de manoeuvre de la tige motorisée et de moyens d'alimentation électrique du premier électroaimant configurés de sorte qu'une commande d'alimentation du moteur dans un sens de poussée du chariot vers la position d'armement commande l'alimentation du premier électroaimant pour coller la palette en sorte de maintenir le bras de verrouillage en position de verrouillage du loquet et de sorte qu'une commande d'alimentation du moteur dans un sens de recul de la tige par rapport au chariot coupe l'alimentation du premier électroaimant.

Le dispositif de commande peut avantageusement comporter un dispositif de temporisation retardant une coupure d'alimentation du premier électroaimant lors de commande d'alimentation du moteur dans un sens de recul de la tige en fin de poussée de la tige sur le chariot. Ceci évite un mauvais encliquetage du chariot en position armée en cas d'instabilité de position de la tige lors de son arrêt et le début de son recul.

Le dispositif de temporisation peut comporter un circuit à condensateur de retard dont la charge fonction du signal électrique d'armement fournit une énergie retardant la coupure d'alimentation du premier électroaimant.

Le dispositif de commande peut comporter un dispositif de limitation d'un temps d'activation du premier électroaimant. Ceci permet un retour du chariot en position déclenchée si la séquence d'armement ne se termine pas dans un temps imparti.

Le dispositif de limitation peut comporter un circuit à condensateur dont le temps de charge limite le temps d'alimentation du premier électroaimant.

Le dispositif de commande peut être relié à des capteurs de fin de course du chariot et/ou de fin de course de la tige qui vont permettre de couper l'alimentation moteur en fin de course et/ou d'informer un opérateur sur la position du chariot et/ou de la tige.

Le dispositif de manoeuvre peut comporter un dispositif de maintien du chariot en position d'armement pourvu d'un doigt de verrouillage maintenu en position de verrouillage du chariot par un second électroaimant.

### Brève description des dessins

D'autres caractéristiques, détails et avantages de l'invention apparaîtront à la lecture de la description détaillée ci-après d'exemples de réalisation non limitatifs, et à l'analyse des dessins annexés, sur lesquels :
La figure 1 montre un dispositif de manoeuvre d'un panneau pivotant ;
La figure 2 montre une vue en perspective éclatée d'un chariot d'un dispositif de manoeuvre selon la présente description ;
La figure 3 montre une vue en perspective du chariot de la figure 3 assemblé.
Les figues 4A et 4B montrent le fonctionnement du mécanisme de la figure 2 ;
La figure 5 montre un schéma de principe d'un dispositif de contrôle du dispositif de manoeuvre du volet ;
La figure 6 donne un exemple de schéma électrique de commande d'électroaimant avec temporisation retard et limitation de temps d'activation.

### Description de modes de réalisation

Les dessins et la description ci-après contiennent des éléments pouvant non seulement servir à mieux faire comprendre la présente invention, mais aussi contribuer à sa définition, le cas échéant.

Comme vu plus haut l'invention concerne un clapet coupe-feu ou un volet de désenfumage qui fonctionnent à l'inverse. Pour un clapet coupe-feu, une position dite armée est une position pour laquelle l'obturateur est ouvert et une position déclenchée est une position pour laquelle l'obturateur est fermé alors que pour un volet de désenfumage la position dite armée est une position dans laquelle l'obturateur est fermé et la position dite déclenchée est une position dans laquelle l'obturateur est ouvert. Dans le cas d'un volet papillon disposé dans un cadre fixe, le panneau obturateur sera parallèle au cadre en position fermée et perpendiculaire au cadre en position ouverte et ces positions seront respectivement armée et déclenchée pour un volet de désenfumage et respectivement déclenchée et armée pour un clapet coupe-feu. Dans la suite on ne parlera que de position armée ou de position déclenchée sans tenir compte de la position ouverte ou fermée du panneau qui dépend du type de dispositif clapet coupe-feu ou volet de désenfumage.

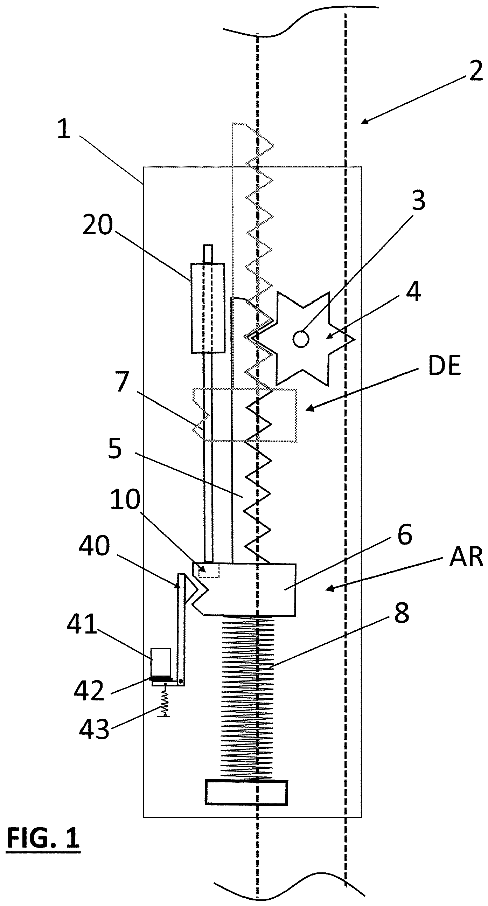

Le dispositif 1 de manoeuvre d'un dispositif obturateur tel qu'un panneau pivotant 2 d'un volet coupe-feu ou d'un volet de désenfumage comporte selon la figure 1 un pignon 4 s'engrenant sur une crémaillère 5 entraînée par un chariot 6 mobile rectilignement. Dans un sens d'armement du dispositif obturateur, le chariot 6 est poussé par une tige motorisée 7 ce qui déplace le chariot dans une position dite armée AR. Dans un sens dit de déclenchement, le chariot est poussé par un ressort de déclenchement 8 jusqu'à atteindre une position dite déclenchée DE représentée en pointillés. Le ressort de déclenchement est préalablement bandé lors de la phase d'armement par la poussée de la tige 7 sur le chariot 6, puis maintenu bandé par une gâchette 40 sur laquelle le chariot s'encliquette en position armé tant qu'un ordre de déclenchement n'est pas réceptionné. Une fois le chariot en position armée, la tige recule pour retourner dans une position d'attente ou position de parking.

Le dispositif de butée débrayable 10 de l'invention est positionné en sorte de permettre de solidariser ou de désolidariser le chariot de la tige d'entraînement.

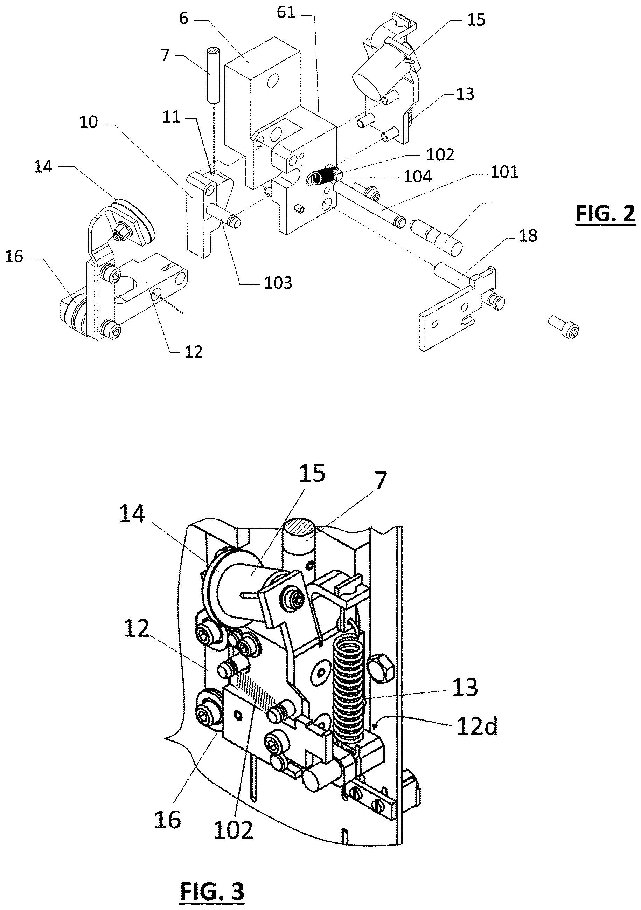

Selon la figure 2 le dispositif comporte :
- Un bloc d'entrainement 61 solidaire du chariot 6, ce bloc d'entrainement est le support des autres composants de la buté débrayable ;
- Un loquet 10 qui porte un épaulement 11 et dont l'axe de pivotement 101 est solidaire du bloc d'entrainement 61. Lors d'un réarmement et lorsque le loquet est en position embrayée, la tige motorisée 7 prend appui sur l'épaulement 11 pour pousser le chariot dans le sens de l'armement du dispositif ;
- Un ressort de rappel 102 du loquet disposé entre un axe 103 sur le loquet et un axe 104 sur le bloc d'entraînement et qui rappelle le loquet en position embrayée ;
- Un bras de verrouillage 12 dont l'axe de pivotement 18 est solidaire du bloc d'entrainement. Ce bras comporte une position activée dans laquelle il maintient le loquet en position embrayée et une position désactivée dans laquelle il libère le loquet.

Le dispositif comporte un ressort de rappel 13 du bras de verrouillage qui tire le bras de verrouillage vers la position désactivée et un premier électroaimant 15 qui, lorsqu'il est actif, positionne le bras de verrouillage en position activée pour laquelle le bras de verrouillage maintient le loquet en position embrayée.

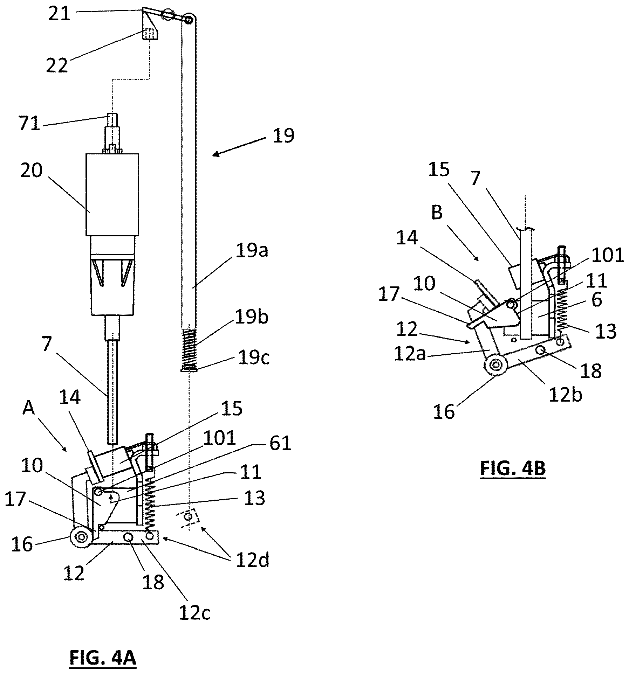

Selon la figure 4A, le dispositif comporte en outre une buté ressort 19, solidaire ou mobile par rapport au châssis de l'actionneur, qui permet lorsque le chariot 6 est en position déclenchée, de pousser le bras de verrouillage 12 en position activée pour maintenir le loquet 10 en position embrayée.

Le loquet comporte deux branches de longueur différente, faisant un angle de part et d'autre de son axe 101 de pivotement. Une première branche porte un doigt 17 du loquet et une seconde branche inclinée par rapport à la première porte l'épaulement 11. Les branches sont réalisées de façon à ce que la distance du doigt 17 à l'axe 101 de rotation du loquet soit plus longue que la distance de l'épaulement 11 audit axe 101 en sorte de permettre le maintien du loquet en position embrayée avec un effort moindre que celui qu'exerce la tige motorisée sur l'épaulement.

Toujours selon la figure 4A, le bras de verrouillage est muni d'un roulement ou d'un galet 16 à l'endroit où il prend appui sur le loquet. Cette disposition permet de libérer le loquet de sa position embrayée avec une usure et une perte d'effort très faible.

Toujours selon l'exemple représenté, le bras de verrouillage est muni d'une plaque ferromagnétique 14 coopérant avec le premier électroaimant 15 dit ventouse à rupture de courant c'est à dire qu'il libère le bras en l'absence de courant. Cette disposition confère à la buté débrayable un caractère de sécurité positive ce qui permet, en cas de rupture, éventuellement accidentelle, de l'alimentation électrique du dispositif, la libération du loquet par le bras de verrouillage, ce qui désolidarise la tige motorisée du loquet comme représenté en figure 4B où la tige 7 est représentée désaccouplée du loquet et ainsi autorise un éventuel passage en position déclenchée fermant le clapet ou ouvrant le volet.

Selon l'exemple représenté, la butée ressort comporte un poussoir 19a et un ressort 19b pour réaliser une butée à rattrapage de jeu. Le poussoir est actionné par une palette pivotante 21 poussée par un doigt 22 fixé au bout libre 71 de la tige 7 lorsque la tige motorisée 7 est en position reculée. Lorsque le chariot arrive en position déclenchée, la tige, poussée par la palette, appui sur le bras de verrouillage et le place en position activé.

Le poussoir 19a peut aussi comporter deux tiges mises bout-à-bout rectilignement par l'emmanchement de chacune aux deux extrémités d'un ressort de compression formant ainsi une buté élastique solidaire du châssis de l'actionneur. Lorsque le chariot est en position déclenchée, la buté ressort pousse le bras de verrouillage vers la position de verrouillage du loquet.

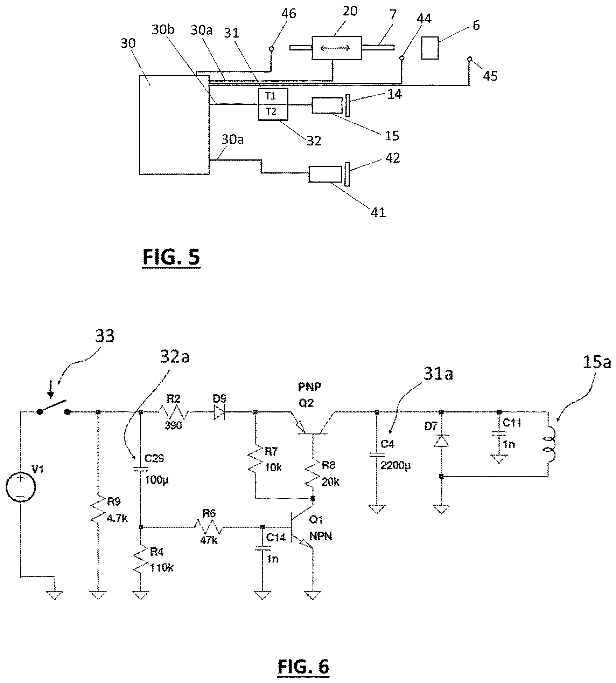

La figure 5 schématise un circuit électronique d'un dispositif de commande 30 du dispositif de manoeuvre du panneau qui comporte une voie 30a d'alimentation du moteur adaptée à le faire tourner dans un sens de déplacement de la tige 7 vers le chariot 6, ce qui correspond à un signal électrique d'armement, et dans un sens inverse de déplacement de la tige vers une position d'attente ou de parking. Le dispositif de commande comporte une voie 30b d'alimentation du premier électroaimant 15 qui va être activée lors de la marche du moteur 20 dans le sens de poussée de la tige 7 vers le chariot 6. Le dispositif de commande comporte un dispositif de temporisation 31 retardant d'une durée T1 une coupure d'alimentation du premier électroaimant lors de l'arrêt de l'alimentation du moteur dans le sens poussée du chariot.

Un exemple de dispositif de commande du premier électroaimant est représenté en figure 6. Ce dispositif comporte un circuit d'alimentation de la bobine 15a du premier électroaimant à partir d'une alimentation V1. Le circuit comporte un interrupteur ou un relais 33 piloté par le dispositif de commande du dispositif de manoeuvre et un transistor de puissance Q2 alimentant la bobine.

Ce dispositif de temporisation comporte un premier condensateur 31a disposé en sortie collecteur du transistor Q2 et qui se charge dès lors que le transistor Q2 est rendu passant par la conduction du transistor Q1 lorsque l'interrupteur 33 est fermé. Lorsque le circuit s'ouvre suite à une inversion de sens de rotation de la tige 7, l'énergie emmagasinée dans le condensateur 31a alimente temporairement la bobine 15a du premier électroaimant 15 et ainsi retarde sa désactivation lors du changement de direction de la tige motorisée. Cette disposition permet, lorsque la tige motorisée 7, après avoir poussé le chariot en position armée, position dans laquelle le chariot comprime le ressort de déclenchement 8, change de direction pour retourner en position de parking, de retarder la désactivation du premier électroaimant 15. En effet, lors du changement de direction de la tige motorisée, l'encliquetage du chariot sur la gâchette 40 passe par une position instable, car l'effort que reçoit le chariot s'inverse. À ce moment d'instabilité, les vibrations qu'engendreraient les éléments mis en mouvement consécutivement à la désactivation du premier électroaimant 15, pourraient empêcher l'encliquetage du chariot en position armé, le chariot pouvant dans ce cas être repoussé par le ressort de déclenchement ce qui refermerait le clapet ou rouvrirait le volet.

Le dispositif de commande comporte aussi selon l'exemple un dispositif 32 de limitation d'un temps T2 d'activation du premier électroaimant.

Un tel dispositif temporisateur limiteur de l'activation du premier électroaimant 15 peut utiliser un second condensateur 32a représenté dans l'exemple de la figure 6. Lorsque le circuit d'alimentation de la bobine est fermé par l'interrupteur 33, la tension à la jonction des résistances R4, R6 va s'élever ce qui rend passant le transistor Q1 puis la charge progressive du condensateur 32a va faire diminuer cette tension jusqu'à ce que la charge du condensateur 32a soit suffisante pour bloquer le transistor Q1 et donc le transistor Q2 et couper le circuit d'alimentation de la bobine 15a de l'électroaimant 15. Le temps de charge du second condensateur 32a est calculé pour permettre de limiter la durée d'activation du premier électroaimant. Cette disposition permet, si l'inversion du sens de déplacement de la tige n'est pas détecté dans le temps imparti, d'autoriser un éventuel passage en position déclenché du clapet ou du volet.

Il est bien entendu possible de réaliser le dispositif de temporisation et/ou le dispositif de limitation autrement et par exemple ces durées peuvent être gérées par un calculateur numérique de gestion du dispositif de manoeuvre.

Lors du fonctionnement du dispositif de manoeuvre, deux cas de figure de sécurisation du système par le dispositif de l'invention sont décrits ci-après :
Cas 1 : armement électrique normal :

Chariot en position déclenchée, la butée ressort 19 appuie sur le bras de verrouillage 12, qui maintient le loquet 10 en position embrayée. Le premier électroaimant n'est pas activé.

Un ordre d'armement active un signal électrique d'armement à l'entrée du circuit électronique du dispositif de commande 30, ce qui provoque :

L'activation du premier électroaimant 15, qui maintient le bras de verrouillage en position de verrouillage ce qui maintient le loquet 10 en position embrayée.

L'activation d'un relais d'armement met en route le moteur 20 et déplace la tige motorisée 7 vers la position d'armement, démarre la charge du premier condensateur de retard T1 en un temps inférieur à la durée de la course du chariot 6 vers la position armée AR et démarre la charge du condensateur de limitation T2 en un temps supérieur à la durée de la course du chariot 6 vers la position armée AR.

En conséquence, la tige motorisée vient appuyer sur le loquet, qui est maintenu en position embrayée par le bras de verrouillage maintenu par le premier électroaimant, la tige pousse sur la butée embrayée ce qui pousse le chariot vers l'armement et bande le ressort 8 de déclenchement jusqu'à l'encliquetage de la gâchette 40.

Lorsque le chariot 6 quitte la position déclenchée, la buté ressort 19 ne maintient plus le bras de verrouillage en position activé, ce maintien est alors réalisé par le premier électroaimant 15.

Lorsque le chariot à atteint la fin de course d'armement 45, l'encliquetage de la gâchette 40 est réalisé, le signal électrique d'armement est interrompu. Ce qui provoque :
- L'inversion du sens de rotation du moteur 20 ce qui débute le retour de la tige motorisée 7 vers sa position de parking.
- La décharge du premier condensateur du dispositif temporisateur 31 générant le retard T1.

Dans ce début de retour, la tige motorisée n'appuie plus sur le loquet, C'est la gâchette 40 qui maintient le chariot armé et le ressort de déclenchement bandé.

Lorsque le premier condensateur est déchargé, le premier électroaimant est désactivé, ce qui libère le bras de verrouillage sous l'action de son ressort de rappel. À ce moment, le loquet de la butée débrayable n'est plus maintenu. Un déclenchement de la gâchette par coupure d'alimentation de son électroaimant 41 libère le chariot qui effectue sa course retour jusqu'à la position déclenchée.

### Cas 2 : armement électrique interrompu par une rupture d'alimentation électrique :

Pour ce cas, la phase d'armement est identique à celle d'un armement électrique normal, jusqu'à ce que survienne la rupture d'alimentation. À ce moment, la tige motorisée n'est plus à sa position de parking, elle est immobilisée à mi-chemin. Soit, elle était en train de pousser la butée débrayable dans le sens de l'armement. Soit, l'armement est réalisé et elle était en train de retourner vers sa position de parking.

Dans les deux cas, le premier électroaimant n'est plus alimenté, alors le bras de verrouillage n'est plus maintenu, et sous l'action du ressort de rappel du bras de verrouillage, le bras de verrouillage ne maintient plus le loquet.

Deux situations sont possibles :
- Si le chariot n'est pas armé, il est en contact avec la tige motorisée.
- Si le chariot est en position armé alors que la tige est arrêtée sur son parcours de retour vers la position d'attente ou de parking, lorsqu'un ordre de déclenchement est émis, la gâchette libère le chariot. Le ressort de déclenchement repousse alors le chariot vers la position déclenché jusqu'à ce qu'il rencontre la tige motorisée.

Dans les deux situations, sous la pression du ressort de déclenchement le loquet, poussé par la tige, pivote. De ce fait, la tige motorisée ne repousse plus le chariot qui continue sa course vers la position déclenchée (cette position correspond à celle de la fonction prioritaire).

Le dispositif de butée débrayable assure donc sa fonction de permettre le déclenchement et la fermeture du clapet ou l'ouverture du volet dans les deux cas de figure.

Le ressort 8 de déclenchement à une force de l'ordre de 100 Newton à 200 Newton et le ressort du loquet une force de quelques Newton ce qui lui permet de ne pas retenir le loquet sous la poussée du ressort de déclenchement.

L'invention ne se limite pas aux exemples décrits ci-avant mais elle englobe toutes les variantes que pourra envisager l'homme de l'art dans le cadre de la protection recherchée, cette dernière étant définie par les revendications annexées. Notamment, le ressort de déclenchement peut être un ressort à compression comme représenté ou un ressort en traction et le dispositif de commande peut comporter d'autres capteurs de surveillance du bon fonctionnement du dispositif de manoeuvre.

## Revendications

1. - Dispositif de manoeuvre d'un panneau obturateur (2) d'un volet de désenfumage ou d'un clapet coupe-feu (1), le panneau obturateur étant un panneau pivotant autour d'un axe de manoeuvre (3) commandé par un dispositif à pignon (4) et crémaillère (5), ledit dispositif de manoeuvre comportant ledit dispositif à pignon (4) et crémaillère (5), ladite crémaillère (5) étant manoeuvrée par un chariot (6), poussé dans un sens d'armement vers une position dite armée (AR) par extrémité avant d'une tige (7) mobile sous l'action d'un moteur (20) et poussé dans un sens de déclenchement vers une position dite déclenchée (DE) par un ressort (8) préalablement bandé par la poussée de la tige sur le chariot, **caractérisé en ce que** le chariot (6) comporte un mécanisme de butée débrayable (6) muni d'un loquet (10), pourvu d'un épaulement (11) d'appui de la tige motorisée, et conformé pour pouvoir pivoter autour d'un axe (101) entre une position d'embrayage (A) pour laquelle la tige pousse sur ledit épaulement dans le sens d'armement et une position de débrayage (B) pour laquelle le loquet s'efface par pivotement et laisse passer la tige, et muni d'un bras de verrouillage (12), mobile entre une position de verrouillage du loquet dans la position d'embrayage (A) et une position de libération du loquet.

2. - Dispositif de manoeuvre selon la revendication 1, comportant un ressort de rappel (13) du bras de verrouillage vers la position de libération du loquet et un moyen (14, 15) de maintien temporaire du bras de verrouillage en position de verrouillage du loquet.

3. - Dispositif de manoeuvre selon la revendication 2, pour lequel le moyen de maintien temporaire du bras de verrouillage en position de verrouillage du loquet comporte une plaque ferromagnétique (14) solidaire du bras et en regard d'un premier électroaimant (15) solidaire du chariot qui, lorsqu'il est alimenté, maintient la plaque ferromagnétique collée, bras en position de verrouillage du loquet.

4. - Dispositif de manoeuvre selon la revendication 3, pour lequel le bras de verrouillage (12) comporte :
- une première branche pourvue d'un premier segment (12a), pourvu d'une extrémité distale porteuse de la plaque ferromagnétique, d'un coude porteur d'un galet (16) ou d'un roulement réalisant une zone d'appui sur un doigt (17) du loquet dans ladite position de verrouillage et d'un second segment (12b) pourvu d'une extrémité proximale au niveau d'un axe (18) de rotation du bras, et ;
- une seconde branche pourvue d'une extrémité proximale au niveau de l'axe (18) et d'une extrémité distale (12d) d'accroche dudit ressort de rappel (13) et formant butée pour une première extrémité d'une butée ressort (19) adapté à pousser le bras en position de collage de la plaque ferromagnétique par le premier électroaimant lorsque le chariot est positionné en position de fermeture du panneau.

5. - Dispositif de manoeuvre selon la revendication 4 pour lequel la butée ressort comporte un poussoir (19a) comporte et un ressort de rattrapage de jeu (19b).

6. - Dispositif de manoeuvre selon la revendication 4 ou 5 pour lequel une seconde extrémité de la butée ressort (19) est reliée à une extrémité arrière de la tige (7) au travers d'un mécanisme de poussée (21, 22) configuré en sorte de déplacer le poussoir (19a) dans la position de poussée du bras en position de collage de la plaque ferromagnétique par le premier électroaimant lorsque la tige (7) est dans une position reculée par rapport au loquet (10).

7. - Dispositif de manoeuvre selon l'une quelconque des revendications précédentes pour lequel la distance du doigt (17) du loquet (10) à l'axe (101) de rotation du loquet (10) est plus longue que la distance de l'épaulement (11) audit axe (101) en sorte de permettre le maintien du loquet en position embrayée avec un effort moindre que celui qu'exerce la tige motorisée sur l'épaulement.

8. - Dispositif de manoeuvre selon l'une quelconque des revendications précédentes, comportant un dispositif (30) de commande pourvu de moyens d'alimentation électrique du moteur (20) de manoeuvre de la tige motorisée (7) et de moyens d'alimentation électrique (30a) du premier électroaimant configurés de sorte qu'une commande d'alimentation du moteur dans un sens de poussée du chariot vers la position d'armement commande l'alimentation du premier électroaimant (15) pour coller la palette (14) en sorte de maintenir le bras de verrouillage en position de verrouillage du loquet et de sorte qu'une commande d'alimentation du moteur dans un sens de recul de la tige par rapport au chariot coupe l'alimentation du premier électroaimant.

9. - Dispositif de manoeuvre selon la revendication 8, comportant un dispositif de temporisation (31) retardant (T1) une coupure d'alimentation du premier électroaimant lors de commande d'alimentation du moteur dans un sens de recul de la tige en fin de poussée de la tige sur le chariot.

10. - Dispositif de manoeuvre selon la revendication 9 pour lequel le dispositif de temporisation comporte un circuit à condensateur (31a) de retard dont la charge fonction du signal électrique d'armement fournit une énergie retardant la coupure d'alimentation du premier électroaimant.

11. - Dispositif de manoeuvre selon la revendication 8, 9 ou 10, comportant un dispositif (32) de limitation d'un temps (T2) d'activation du premier électroaimant.

12. - Dispositif de manoeuvre selon la revendication 11, pour lequel le dispositif (32) de limitation comporte un circuit à condensateur (32a) dont le temps de charge limite le temps d'alimentation du premier électroaimant.

13. - Dispositif de manoeuvre selon l'une quelconque des revendications 8 à 12, pour lequel le dispositif de commande est relié à des capteurs (44, 45, 46) de fin de course du chariot et/ou de fin de course de la tige.

14. - Dispositif de manoeuvre selon l'une quelconque des revendications précédentes, comportant un dispositif de maintien du chariot en position d'armement pourvu d'un doigt de verrouillage (40) maintenu en position de verrouillage du chariot par un second électroaimant (41).

## Patentansprüche

1. Vorrichtung zur Betätigung einer Verschlussplatte (2) einer Rauchabzugsklappe oder einer Brandschutzklappe (1), wobei die Verschlussplatte eine Platte ist, die um eine Betätigungsachse (3) schwenkt, die durch eine Vorrichtung mit Ritzel (4) und Zahnstange (5) gesteuert wird, wobei die Betätigungsvorrichtung die Vorrichtung mit Ritzel (4) und Zahnstange (5) umfasst, wobei die Zahnstange (5) durch einen Schlitten (6) betätigt wird, der in einer Spannrichtung durch das vordere Ende einer unter der Wirkung eines Motors (20) beweglichen Stange (7) in eine sogenannte gespannte Position (AR) geschoben wird und in einer Auslösungsrichtung durch eine Feder (8), die zuvor durch den Druck der Stange auf den Schlitten gespannt wurde, in eine sogenannte ausgelöste Position (DE) geschoben wird, **dadurch gekennzeichnet, dass** der Schlitten (6) einen auskuppelbaren Anschlagmechanismus (6) umfasst, der mit einem Riegel (10) versehen ist, der mit einer Schulter (11) zur Auflage der motorisierten Stange versehen ist, und dazu ausgebildet ist, um eine Achse (101) zwischen einer Einkuppelstellung (A), in der die Stange auf die Schulter in Spannrichtung drückt, und einer Auskuppelstellung (B), in der den Riegel durch Schwenken zurückweicht und die Stange passieren lässt, zu schwenken, und mit einem Verriegelungsarm (12) versehen ist, der zwischen einer Stellung zur Verriegelung der Riegel in der Einkuppelstellung (A) und einer Stellung zur Freigabe des Riegels beweglich ist.

2. Betätigungsvorrichtung nach Anspruch 1, umfassend eine Feder (13) zur Rückstellung des Verriegelungsarms in Richtung der Freigabeposition des Riegels und einem Mittel (14, 15) zum vorübergehenden Halten des Verriegelungsarms in der Verriegelungsposition des Riegels.

3. Betätigungsvorrichtung nach Anspruch 2, wobei das Mittel zum vorübergehenden Halten des Verriegelungsarms in der Verriegelungsposition des Riegels eine ferromagnetische Platte (14) umfasst, die fest mit dem Arm verbunden ist und einem ersten Elektromagneten (15) gegenüberliegt, der fest mit dem Schlitten verbunden ist und der, wenn er mit Strom versorgt wird, die ferromagnetische Platte in Anlage hält, wobei der Arm in der Verriegelungsposition des Riegels ist.

4. Betätigungsvorrichtung nach Anspruch 3, wobei der Verriegelungsarm (12) umfasst:
- einen ersten Schenkel, versehen mit einem ersten Segment (12a), versehen mit einem distalen Ende, das die ferromagnetische Platte trägt, einem Knick der eine Rolle (16) oder ein Lager trägt, das einen Auflagebereich auf einem Finger (17) des Riegels in der Verriegelungsposition bildet, und versehen mit einem zweiten Segment (12b), versehen mit einem proximalen Ende auf Höhe einer Drehachse (18) des Arms, und
- einen zweiten Schenkel, versehen mit einem proximalen Ende auf Höhe der Achse (18) und einem distalen Ende (12d) zum Einhaken der Rückholfeder (13), der einen Anschlag für ein erstes Ende einer Anschlagfeder (19) bildet, die dazu ausgebildet ist, den Arm in Anlageposition der ferromagnetischen Platte durch den ersten Elektromagneten zu drücken, wenn der Schlitten in der Schließposition der Platte positioniert ist.

5. Betätigungsvorrichtung nach Anspruch 4, wobei der Federanschlag einen Drücker (19a) aufweist, der eine Spielnachstellfeder aufweist.

6. Betätigungsvorrichtung nach Anspruch 4 oder 5, wobei ein zweites Ende des Federanschlags (19) mit einem hinteren Ende der Stange (7) über einen Schiebemechanismus (21, 22) verbunden ist, der dazu ausgebildet ist, den Drücker (19a) durch den ersten Elektromagneten in die Drückstellung des Arms in Anlageposition der ferromagnetischen Platte zu bewegen, wenn sich die Stange (7) bezüglich des Riegels (10) in einer zurückgezogenen Position befindet.

7. Betätigungsvorrichtung nach einem der vorhergehenden Ansprüche, wobei der Abstand des Fingers (17) vom Riegel (10) zur Drehachse (101) des Riegels (10) länger ist als der Abstand der Schulter (11) zur Achse (101), so dass der Riegel mit einem geringeren Aufwand in der eingerückten Position gehalten werden kann als demjenigen, den die die motorisierte Stange auf die Schulter ausübt.

8. Betätigungsvorrichtung nach einem der vorhergehenden Ansprüche, umfassend eine Steuervorrichtung (30), die mit Mitteln zur elektrischen Versorgung des Motors (20) zur Betätigung der motorisierten Stange (7) und Mitteln zur elektrischen Versorgung (30a) des ersten Elektromagneten versehen ist, die derart ausgebildet sind, dass ein Befehl zur Versorgung des Motors in einer Schieberichtung des Schlittens zu der Stellung der Spannposition die Stromversorgung des ersten Elektromagneten (15) zur Anlage der Platte (14) steuert, um den Verriegelungsarm in der Verriegelungsposition des Riegels zu halten, und derart, dass eine Stromversorgungssteuerung des Motors in einer Richtung, in der die Stange relativ zum Schlitten zurückgeschoben wird, die Stromversorgung des ersten Elektromagneten unterbricht.

9. Betätigungsvorrichtung nach Anspruch 8, umfassend eine Verzögerungsvorrichtung (31), die eine Unterbrechung der Stromversorgung des ersten Elektromagneten bei der Steuerung der Stromversorgung des Motors in einer Rückwärtsrichtung der Stange am Ende des Schiebens der Stange auf den Schlitten verzögert (T1).

10. Betätigungsvorrichtung nach Anspruch 9, bei der die Verzögerungsvorrichtung 10 eine Schaltung mit einem Verzögerungskondensator (31a) umfasst, dessen Ladung in Abhängigkeit vom elektrischen Schaltsignal eine Energie liefert, die die Unterbrechung der Stromversorgung des ersten Elektromagneten verzögert.

11. Betätigungsvorrichtung nach Anspruch 8, 9 oder 10, umfassend eine Vorrichtung (32) zur Begrenzung einer Zeit (T2) für die Aktivierung des ersten Elektromagneten.

12. Betätigungsvorrichtung nach Anspruch 11, bei der die Begrenzungsvorrichtung (32) eine Kondensatorschaltung (32a) umfasst, deren Ladezeit die Einschaltzeit des ersten Elektromagneten begrenzt.

13. Betätigungsvorrichtung nach einem der Ansprüche 8 bis 12, bei der die Steuervorrichtung mit Sensoren (44, 45, 46) für die Endstellung des Schlittens und/oder die Endstellung der Stange verbunden ist.

14. Betätigungsvorrichtung nach einem der vorhergehenden Ansprüche, umfassend eine Vorrichtung zum Halten des Schlittens in der Spannstellung, die mit einem Verriegelungsfinger (40) versehen ist, der durch einen zweiten Elektromagneten (41) in der Verriegelungsstellung des Schlittens gehalten wird.

## Claims

1. - Device for manoeuvring a closing panel (2) of a smoke extraction flap or a fire shutter (1), the closing panel being a panel pivoting about an operating shaft (3) controlled by a pinion (4) and rack (5) device, the said rack (5) being operated by a carriage (6), pushed in an arming direction towards a position known as the armed position (AR) by the front end of a rod (7) which is movable under the action of a motor (20) and pushed in a release direction towards a position known as the released position (DE) by a spring (8) which has been previously tensioned by the thrust of the rod on the carriage, **characterised in that** the carriage (6) comprises a disengageable stop mechanism (6) equipped with a latch (10), provided with a shoulder (11) for supporting the motorised rod and shaped so as to be able to pivot about an axis (101) between an engagement position (A) in which the rod pushes on the said shoulder in the direction of arming and a disengagement position (B) in which the latch is retracted by pivoting and allows the rod to pass, and provided with a locking arm (12), movable between a position of locking the latch in the engagement position (A) and a position of release of the latch.

2. - Manoeuvring device according to claim 1, comprising a spring (13) for returning the locking arm to the latch release position and means (14, 15) for temporarily holding the locking arm in the latch locking position.

3. - Manoeuvring device according to claim 2, for which the means for temporarily holding the locking arm in the latch locking position comprises a ferromagnetic plate (14) integral with the arm and facing a first electromagnet (15) integral with the carriage which, when powered, holds the ferromagnetic plate stuck to the arm in the latch locking position.

4. - Manoeuvring device according to claim 3 wherein, the locking arm (12) comprises :
- a first branch provided with a first segment (12a), provided with a distal end carrying the ferromagnetic plate, with a bend carrying a roller (16) or a bearing forming a bearing zone on a finger (17) of the latch in said locking position and with a second segment (12b) provided with a proximal end at the level of an axis (18) of rotation of the arm, and ;
- a second branch provided with a proximal end at the level of the shaft (18) and a distal end (12d) for hooking said return spring (13) and forming an abutment for a first end of a spring abutment (19) adapted to push the arm into the position of sticking the ferromagnetic plate by the first electromagnet when the carriage is positioned in the panel closing position.

5. - Manoeuvring device according to claim 4 wherein the spring abutment comprises a plunger (19a) and a backlash spring (19b).

6. - Manoeuvring device according to claim 4 or 5 wherein a second end of the spring abutment (19) is connected to a rear end of the rod (7) through a push mechanism (21, 22) configured to move the push rod (19a) into the push position of the arm in the position of sticking the ferromagnetic plate by the first electromagnet when the rod (7) is in a retracted position with respect to the latch (10)

7. - Manoeuvring device according to any one of the preceding claims for which the distance of the finger (17) of the latch (10) from the axis (101) of rotation of the latch (10) is longer than the distance of the shoulder (11) from said axis (101) so as to allow the latch to be held in the engaged position with less force than that exerted by the motorised rod on the shoulder.

8. - Manoeuvring device according to any of the preceding claims, comprising a control device (30) provided with means for supplying electrical power to the motor (20) for manoeuvring the motorised rod (7) and with means (30a) for supplying electrical power to the first electromagnet, which are configured so that a command to supply power to the motor in a direction of pushing the carriage towards the armed position controls the supply of power to the first electromagnet (15) in order to stick the pallet (14) so as to keep the locking arm in the armed position and so that a command to supply power to the motor in a direction in which the rod moves backwards with respect to the carriage cuts off power to the first electromagnet.

9. - Manoeuvring device according to claim 8, comprising a delay device (31) delaying (T1) a cut-off of the power supply to the first electromagnet when the power supply to the motor is commanded in a direction of retraction of the rod at the end of the pushing of the rod onto the carriage.

10. Manoeuvring device according to claim 9 for which the delay device comprises a delay capacitor circuit (31a) whose charge is a function of the electrical arming signal and provides an energy delaying the power supply cut-off of the first electromagnet.

11. - Manoeuvring device according to claim8 9 or 10, comprising a device (32) for limiting a time (T2) for activating the first electromagnet.

12. - Manoeuvring device according to claim 11, wherein the limiting device (32) comprises a capacitor circuit (32a) whose charging time limits the power supply time of the first electromagnet.

13. - Manoeuvring device according to any one of claims 8 to 12, wherein the control device is connected to sensors (44, 45, 46) for the end position of the carriage and/or the end position of the rod.

14. Manoeuvring device according to any of the preceding claims, comprising a device for holding the carriage in the armed position provided with a locking finger (40) held in the carriage locking position by a second electromagnet (41).
